# EUROPÄISCHE PATENTSCHRIFT

(11) **EP 2 181 059 B1**
(45) Veröffentlichungstag und Bekanntmachung des Hinweises auf die Patenterteilung: **06.06.2012**
(21) Anmeldenummer: 08772581.8
(22) Anmeldetag: 10.07.2008
(51) Int. Cl.: B65G 59/02, B65G 61/00

(54) **DEPALLETIERENTNAHMEFÖRDERER**
DEPALLETIZING REMOVAL CONVEYOR
CONVOYEUR DE PRÉLÈVEMENT DE DÉPALLÉTISATION

(30) Priorität: 20.07.2007 AT 11552007
(43) Veröffentlichungstag der Anmeldung: 05.05.2010
(73) Patentinhaber: TGW Mechanics GmbH, 4600 Wels (AT)
(72) Erfinder: ANGLEITNER, Karl, A-4600 Wels (AT)
(74) Vertreter: Ofner, Clemens
(86) Internationale Anmeldenummer: PCT/AT2008/000252
(87) Internationale Veröffentlichungsnummer: WO 2009/012508

(56) Entgegenhaltungen:
- EP-A- 0 321 680
- WO-A-2006/088354

## Beschreibung

Die Erfindung betrifft eine Depalletiervorrichtung, wie sie im Oberbegriff des Anspruches 1 beschrieben ist, sowie ein Verfahren zum Betrieb einer solchen, wie es im Anspruch 27 beschrieben ist.

Aus der EP 0 462 518 B 1 ist ein Verfahren und eine Vorrichtung zum Aufnehmen bzw. Absetzen von paketförmigem Gut bekannt. Ein horizontal verfahrbarer Aufnahmetisch weist auf seiner Oberseite eine Transporteichrichtung für das aufzunehmende oder abzugebende Gut auf. An entgegen gesetztem Tischende sind angetriebene rollen- bzw. umlenkrollenartige Aufnahmeorgane vorgesehen die bei einer Anstellung an Vertikalflächen des aufzunehmenden Guts durch Reibungskraft der drehenden Aufnahmeorgane das Gut anheben und dieses mit der Transportvorrichtung unterfahren und damit aufgenommen wird. Ein erster Antrieb ist zum Verfahren des Aufnahmetisches und ein zweiter Antrieb für das Aufnahmeorgane bzw. der Transporteinrichtung vorgesehen. Eine Antriebssteuerung bewirkt in Abhängigkeit von Steuersignalen von Näherungssensoren eine Regelung der Fahrgeschwindigkeit des Aufnahmetisches wobei bei der Annäherung und Anlage des Aufnahmeorgans an das bzw. am Gut bei gleich bleibender Drehzahl des Aufnahmeorgans die Fahrgeschwindigkeit des Aufnahmetisches geringer ist als nach dem Anheben des Guts und dessen Aufnehmen auf den Aufnahmetisch.

Aus der WO 2006/088354 A1 ist eine Depalletiervorrichtung gemäß dem Oberbegriff des Anspruches 1 mit einem mittels eines Vorschubantriebes linear verfahrbarem Hubgeräts mit höhenverstellbarem Aufnahmetisch bekannt. Dieser ist mit einem Rollen- oder Bandförderer und einer dem Rollen- oder Bandförderer vorgelagerten Aufnahmerolle mit einem gemeinsamen Antrieb versehen. Durch Aufbringung einer Reibungskraft an einer Vertikalfläche eines von einem Stapel aufzunehmenden Transportguts durch die Aufnahmerolle wird ein Anheben und anschließendes Übernehmen des Transportguts auf den Rollen- oder Bandförderer erreicht. Der Aufnahmerolle vorgelagert und beidseits des Guts sind auf einem Tragrahmen der Aufnahmerolle Detektiermittel, gebildet aus einem Lichtstrahlsender und einem Lichtstrahlempfänger, vorgesehen. Mittels Signale dieser Einrichtung wird in Abhängigkeit der Annäherung der Transportrolle an das Gut wird bei Feststellung der Annäherung an das Transportgut, durch Unterbrechung des Lichtstrahls, die Vorschubgeschwindigkeit durch Erhöhung der Drehzahl des Vorschubantriebes des Aufnahmetisches zur Erzielung einer vermehrten Reibkraft ausgehend von einer geringeren Basisgeschwindigkeit erhöht. Sobald der angehobene Zustand mittels des Lichtstrahls detektiert wird erfolgt eine Reduzierung der Drehzahl und damit der Vorschubgeschwindigkeit. Die Erhöhung der Vorschubgeschwindigkeit erhöht jedoch auch die Druckbelastung am aufzunehmenden Fördergut mit der Gefahr einer Beschädigung.

Aus der DE 26 31 942 A1 ist eine weitere Depalletiervorrichtung mit einem horizontal verstellbaren, mit einem Antrieb versehenen Bandförderer bekannt, der in einem Endbereich eine im Durchmesser klein gehaltene Umlenkrolle für das bandförmige Fördermittel aufweist. Die Umlenkrolle ist über eine Federanordnungen elastisch gegenüber dem Traggestell des Bandförderers abgestützt und parallel zu einer Verfahrrichtung des Aufnahmetisches verstellbar geführt gelagert. Bei fortschreitender Bewegung des Aufnahmetisches und Anlage der Umlenkrolle an einer Vertikalfläche des Guts wird bei einer Einfederung entsprechend der Federkennlinie ein erhöhter Druck auf das Gut ausgeübt was eine zunehmende Reibungskraft für den Anhebevorgang bewirkt.

Aufgabe der Erfindung ist es eine Depalletiervorrichtung zu schaffen mit der kurze Zykluszeiten für den Depalletiervorgang und ein hoher Automatisierungsgrad bei Abstimmung der Depalletiervorrichtung auf spezifische Eigenschaften des Transportguts erreicht wird.

Diese Aufgabe der Erfindung wird durch die im Anspruch 1 wiedergegebenen Merkmalen erreicht. Der überraschende Vorteil dabei ist, dass ein funktioneller und technisch hochwertiger, den Anwendungsbereich einer Depalletiereinrichtung auf die in ihrer Beschaffenheit unterschiedlichen, in einem Lagerungssystem zu disponierenden Transportgütern durch eine, in den Ablauf integrierte Auswertung der auf das Transportgut einwirkenden Kraft erreicht wird und die als Regelgröße in Abhängigkeit von dem zu depalletierenden Transportgut für die Regelung der Aufnahmefördervorrichtung vorgebbar ist.

Möglich ist aber auch eine Ausbildung nach Anspruch 2 durch die ein einfacher mechanischer Aufbau bei hoher Funktionalität erreicht wird und durch einen modulartigen Aufbau auch eine Nachrüstung bestehender Systeme kostengünstig durchführbar ist.

Von Vorteil ist aber auch eine Ausbildung nach Anspruch 3, wodurch eine weitere technisch einfach zu realisierende und funktionelle Variante zur Regelung einer Aufnahmefördervorrichtung mit einfach zu realisierender Produktabstimmung erreicht wird.

Weitere vorteilhafte Ausgestaltungen beschreiben die Ansprüche 4 bis 8 durch die eine wartungsarme und eine hohe Langzeit-Funktionssicherheit gewährleistet wird.

Die in den Ansprüchen 9 bis 12 wiedergegebenen vorteilhaften Ausbildungen ermöglichen eine den individuellen Anforderungen entsprechende Ausgestaltung der Depalletiervorrichtung.

Möglich ist aber auch eine Ausbildung nach Anspruch 13 wodurch ausgehend von einem Antriebs- Drehmoment der Förderwalze der Aufnahmefördervorrichtung als Lastparamer eine Regelung des Antriebsmotors vorgenommen wird.

Durch die im Anspruch 14 wiedergegebene vorteilhafte Ausbildung ist eine an eine Lagerverwaltungsorganisation für die Disposition unterschiedlicher Warengüter auslegbare Depalletiervorrichtung erreicht.

Gemäß den in den Ansprüchen 15 bis 18 wiedergegebenen vorteilhaften Ausbildungen wird eine feinfühlige und wahlweise mit unterschiedlichen Komponenten erstellte Depalletiervorrichtung erreicht.

Es beschreiben auch die Ansprüche 19 bis 22 vorteilhafte Ausgestaltungen durch welche der Abhebevorgang eines zu depalletierenden Transportguts durch die Möglichkeit der Minimierung des erforderlichen Anhebevorganges erreicht wird sowie die Wartung der Depalletiervorrichtung und gegebenenfalls Ersatz von der Abnützung besonders unterliegenden Komponenten vereinfacht wird.

In den Ansprüche 23 bis 25 beschriebenen vorteilhaften Ausgestaltungen gewährleisten einen einfachen mechanischen und damit auch kostengünstigen Aufbau der Depalletiervorrichtung.

Schließlich ist auch eine Ausbildung gemäß Anspruch 26 vorteilhaft wodurch eine hohe Funktionalität und Betriebssicherheit der Depalletiervorrichtung bei Minimierung der Bauelemente erreicht wird.

Die Erfindung betrifft aber auch ein Verfahren zum Betrieb der Depalletiervorrichtung zur Lösung der gestellten Aufgabe gemäß dem Oberbegriff des Anspruches 27.

Gekennzeichnet ist das Verfahren gemäß den Maßnahmen im Anspruch 27. Der überraschende Vorteil dabei ist ein hoher Automatisierungsgrad für eine Anpassung des Depalletiervorganges an die Beschaffenheit des Transportguts wodurch die Betriebssicherheit erhöht und kurze Taktzeiten und eine Minimierung von Manipulationskosten erreicht wird.

Schließlich sind weitere vorteilhafte Maßnahmen in den Ansprüchen 28 bis 32 beschrieben, womit optimierte und die Depalletierleistung erhöhende Maßnahmen durch eine Regelungsanpassung an das Transportgut erreicht werden.

Zum besseren Verständnis der Erfindung wird diese anhand der in den Figuren gezeigten Ausführungsbeispiele näher erläutert.

Es zeigen:
- Fig. 1: die erfindungsgemäße Depalletiervorrichtung in Ansicht;
- Fig. 2: eine Detaildarstellung der Depalletiervorrichtung nach Fig. 1 in schematischer Darstellung;
- Fig. 3: eine weitere Detaildarstellung der Depalletiervorrichtung in Ansicht;
- Fig. 4: eine Detaildarstellung einer Stützvorrichtung der Depalletiervorrichtung bei Anlage der Aufnahmefördervorrichtung an das Transportgut, in Ansicht;
- Fig. 5: eine weitere Detaildarstellung der Depalletiervorrichtung bei angehobenen Transportgut, in Ansicht;
- Fig. 6: eine andere Ausbildung der Depalletiervorrichtung mit der Aufnahmefördervorrichtung, in vereinfachter Darstellung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese bei einer Lageänderung sinngemäß auf die neue Lage zu übertragen. Weiters können auch Einzelmerkmale oder Merkmalskombinationen aus den gezeigten und beschriebenen, unterschiedlichen Ausführungsbeispielen für sich eigenständige, erfinderische oder erfindungsgemäße Lösungen darstellen.

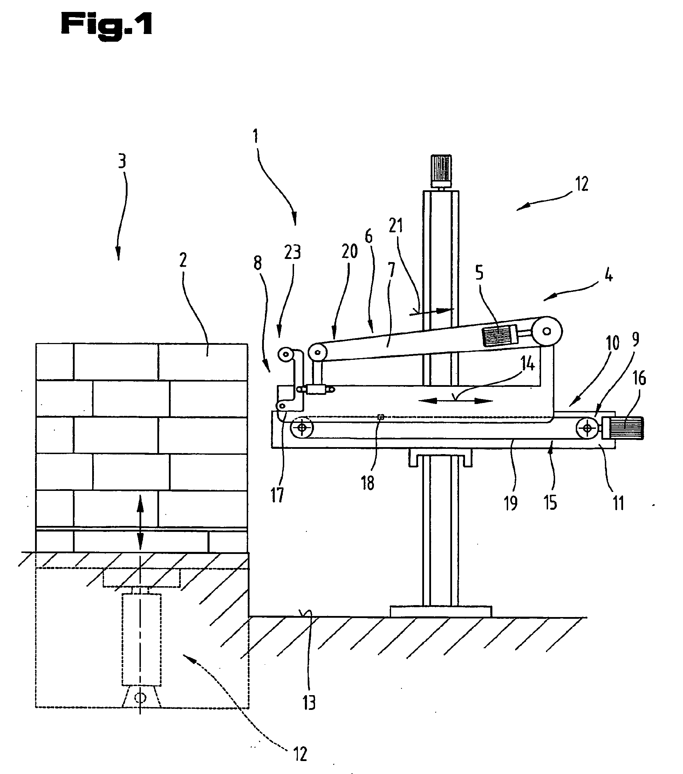

In den Fig. 1 bis 3 ist eine Depalletiervorrichtung 1 zum Aufnehmen eines Transportguts 2, z.B. von Transportbehältern, Lagegebinde, Pakete, von einem bereitgestellten Stapel 3 des Transportguts 2 gezeigt Ein mit einer Fördervorrichtung 4 mit über einem Antriebsmotor 5 betriebenes Fördermittel 6, z.B. Band 7, Riemen, Kette, Rollen, Walzen, versehener Aufnahmetisch 8 ist mittels eines Vorschubantriebes 9 in einer Führungsanordnung 10, die bspw. in Tragarmen 11 einer Hubvorrichtung 12, etwa parallel zu einer Aufstandsfläche 13 verlaufen, linear - gemäß Doppelpfeil 14 - verstellbar. Die Vorschubvorrichtung 9 wird z.B. durch einen Zugmitteltrieb 15 und einem Antriebsmotor 16 gebildet, wobei ein Tragrahmen 17 des Aufnahmetisches 8 über einen Mitnehmer 18 mit einem Zugmittel 19, z.B. Kette, Riemen etc. antriebsverbunden ist.

In zumindest einem Endbereich 20 des Tragrahmens 17 des Aufnahmetisches 8 und entgegen einer Förderrichtung - gemäß Pfeil 21 - der Fördervorrichtung 4 ist dieser vorgeordnet ein sich über eine gesamte Transportbreite 22 erstreckende Aufnahmefördervorrichtung 23, gebildet durch eine Förderwalze 24 mit relativ geringen Durchmesser 25 angeordnet.

Eine Antriebsvorrichtung 26 für die Förderwalze 24, die vom Vorschubantrieb 9 und dem Antrieb des Fördermittels 6 der Fördervorrichtung 4 unabhängig ist bildet ein seitlich am Tragrahmen 17 angeordneter Antriebsmotor 27 z.B. drehzahlregelbarer Servomotor, Hydromotor etc. Aus antriebstechnischen und baulichen Gründen ist vorzugsweise ein Winkelgetriebe 28 vorgesehen und erfolgt eine Antriebsverbindung zwischen dem Antriebsaggregat und der drehbar und wie noch im Detail später beschrieben im geringen Ausmaß lageveränderbar gelagerten Förderwalze 24 über eine vorzugsweise Gelenkwelle 29, wodurch an der Förderwalze 24 geringe Massenkräfte anwirken.

Wie in der Fig. 1 in unterbrochenen Linien dargestellt, ist es selbstverständlich auch möglich, das zu depalletierende Transportgut 2 auf einer als Hubplattform ausgebildeten Hubvorrichtung 12 abzustellen, um die Höhenlage entsprechend den Lagen des zu depalletierenden Transportgutes 2 in Hinblick auf die von der Depalletiervorrichtung 1 mit der Aufnahmefördervorrichtung 23 und der Fördervorrichtung 4 vorgegebenen Transportebene 36 in Höhenrichtung zu verstellen. Dies ermöglicht, einen in der Höhenlage fixen Aufbau der Depalletiervorrichtung 1 und weiterführender Fördermittel in einem Lagebereich und bildet somit eine weitere wesentliche Gestaltungsmöglichkeit für ein Lager- und Warenumschlagssystem.

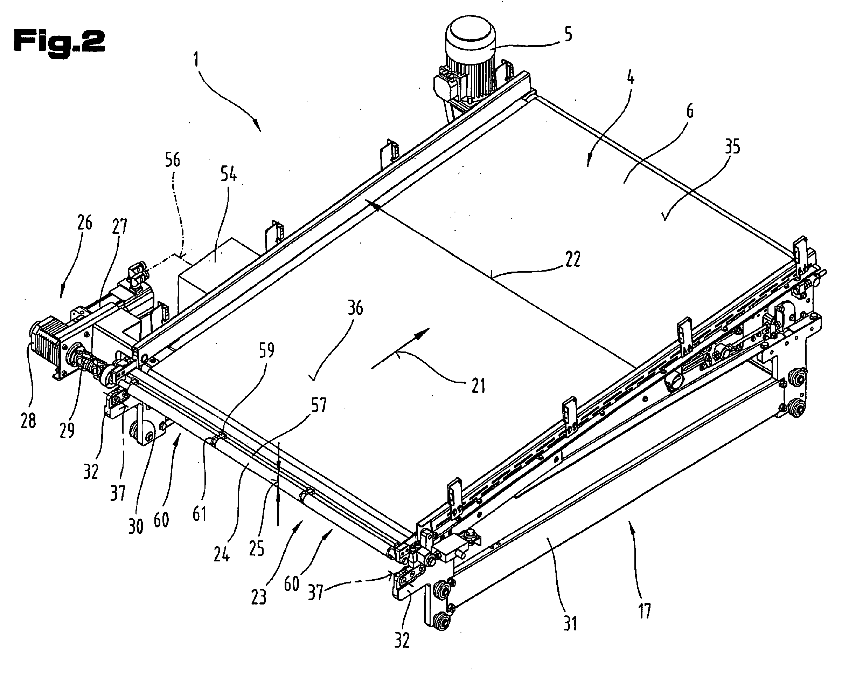

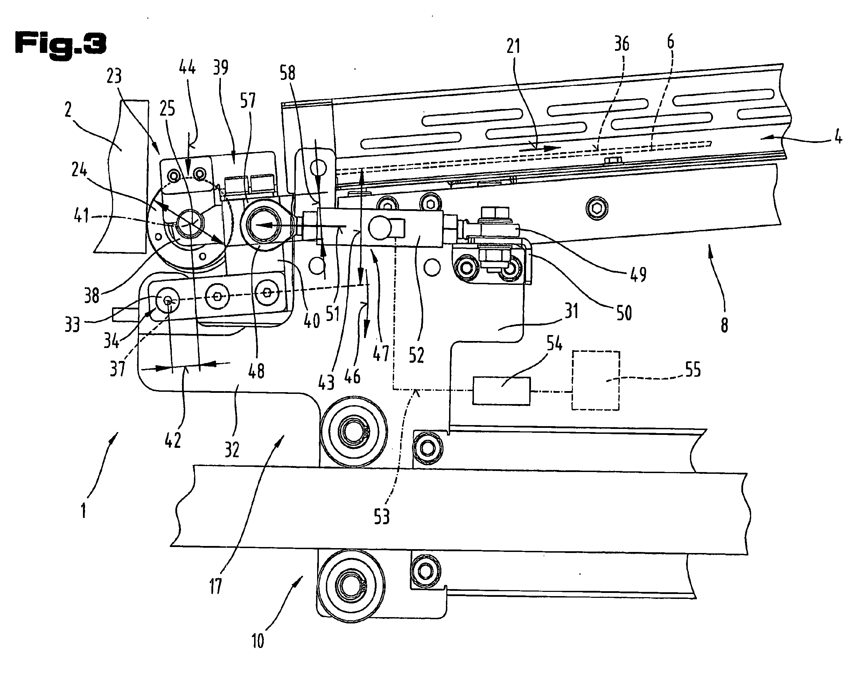

Wie nun insbesondere den Fig. 2 und 3 zu entnehmen ist, ist eine lichte Weite zwischen in Vorschubrichtung - gemäß Doppelpfeil 14 - ersteckenden Seitenprofilen 30, 31 des Tragrahmens 17 gering größer als die etwa vom Fördermittel 6 bzw. durch Seitenführungsprofile begrenzte Transportbreite 22. Die Seitenprofile 30, 31 sind entgegen der Transportrichtung - gemäß Pfeil 21- den Tragrahmen 17 überragende Tragfortsätze 32 mit Schwenklager 33 einer Schwenklageranordnung 34 auf.

Diese Schwenklageranordnung 34 bildet eine, zu einer Oberfläche 35 des Fördermittels 6 bzw. einer Transportebene 36 parallel und zur Förderrichtung - gemäß 21 - senkrecht verlaufende Schwenkachse 37, für eine die Förderwalze 24 in Drehlagern 38 drehbar lagernde Schwenkhebelanordnung 39. Diese wird im Wesentlichen durch zwei Tragbügel 40 gebildet die mit einem Schenkel im Schwenklager 33 gelagert sind und in einem weiteren Schenkel die Drehlager 38 für die Förderwalze 24 aufweisen. Eine dadurch gebildete Drehachse 41, um die die Förderwalze 24 drehbar ist, verläuft parallel zu der Schwenkachse 37.

Die Drehachse 41 ist gegenüber der Schwenkachse 37 in Transportrichtung - gemäß Peil 21 - um eine Distanz 42 versetzt und gegenüber der Transportebene 36 etwas tiefer gesetzt.

Sobald die Förderwalze 24 in Folge der Vorschubbewegung des Aufnahmetisches 8 an einer Seitenfläche des aufzunehmenden Transportguts 2 zur Anlage gelangt, werden Kräfte bewirkt - gemäß Pfeil 44 - die zu einer Schwenkbewegung - gemäß Pfeil 46 - der Schwenkhebelanordnung 34 in Richtung der Fördervorrichtung 4 führen.

Dieser Schwenkbewegung entgegenwirkend ist zwischen der Schwenkhebelanordnung 39, insbesondere den Tragbügeln 40 und dem Tragrahmen 17 bzw. den Seitenprofilen 33, 31, bevorzugt je eine Stützvorrichtung 47 vorgesehen, welche mittels Anlenkmitteln 48 ,49 einerseits am Tragbügeln 40 und andererseits einem Ankerprofil 50 der Seitenprofile 30, 31 angeordnet ist.

Die Stützvorrichtung 47 wirkt mit einer, einen Lastparameter bildenden Stützkraft - gemäß Pfeil 51 - einer Schwenkbewegung, durch ein durch die Kräfte - gemäß Pfeil 44 - bewirktem Drehmoment auf die Schwenkhebelanordnung 39, entgegen.

Die Stützvorrichtung 47 ist zur Erfassung der in Abhängigkeit von den über die Förderwalze 24 auf die Hebelanordnung einwirkenden Kräften - gemäß Pfeil 44 - einwirkenden Kräfte variierend entgegenzusetzenden Stützkraft - gemäß Pfeil 51 ausgelegt wozu diese mit einem Erfassungsmittel 52 versehen ist oder zur Erfassung an sich ausgelegt ist. Die ermittelte Größenordnung der Stützkraft - gemäß Pfeil 51- wird über generierte Signale über eine Kommunikationsverbindung 53, z.B. Leitung oder einer drahtlosen Signalübertragung an eine Steuerund Regeleinrichtung 54 geleitet, die ggf. mit einer Zentralsteuereinrichtung 55 kommunikationsverbunden ist.

Entsprechend von in der Steuer- und Regeleinrichtung 54 oder Zentralsteuereinrichtung 55 hinterlegter Regelalgorithmen oder Regeldaten erfolgt eine Drehzahlregelung des Antriebsmotors 27 der Antriebsvorrichtung 26 für die Förderwalze 24 zwischen einer Basisdrehzahl und einer dazu gesteigerten Drehzahl.

Die Basisdrehzahl der Förderwalze 24 ist bevorzugt auf eine Umfangsgeschwindigkeit ausgelegt, die einer annähernd gleich bleibenden Fördergeschwindigkeit des Fördermittels 6 der Fördervorrichtung 4 entspricht. Die Regelung der Drehzahlerhöhung der Förderwalze 24 erfolgt in Abhängigkeit des Anstieges der ermittelten Stützkraft - gemäß Pfeil 51.

Wie weiter noch den Fig. 2 und 3 zu entnehmen, ist die Schwenkhebelanordnung 39 mit den Tragbügeln 40 mittels einer, diese in Richtung der Transportbreite 22 verbindenden Querstrebe 57 komplettiert, die sich zwischen der Förderwalze 24 und einer Umlenkrolle des Fördermittels 6 erstreckt. Eine Höhe 58 der Querstrebe 57 ist kleiner als der Durchmesser 25 der Förderwalze 24, wodurch keine Störkontur gegeben ist. An dieser Querstrebe 57 sind bevorzugt Stützlager 59 in Richtung der Förderwalze 24 überstehend angeordnet.

Möglich ist auch eine Förderwalze 24 mit einer durchgehenden Achse, jedoch ist es nach einer weiteren Ausführung, wie dargestellt auch möglich, die Förderwalze 24 in mehrere Walzenabschnitte 60 zu unterteilen. Beispielsweise ist es möglich die Walzenabschnitte 60 mit über Drehzahl übertragende und die Walzenabschnitte 60 in einer geringen Abstand voneinander zu distanzierende Achsbolzen 61 zu verbinden. Dies bietet die Möglichkeit, in dieser Distanz die Stützlager 49 anzuordnen, die als die Achsbolzen 61 bereichsweise untergreifende Schalenlager ausgebildet sein können.

Dadurch ist es möglich, die Förderwalze 24 bei einer relativ großen Transportbreite 22 mit kleinem Durchmesser 25 auszubilden, wodurch der Aufnahmevorgang für das Aufnehmen des Transportgutes 2 erleichtert wird und andererseits ein Austausch der einen hohen Reibverschleiß ausgesetzten Förderwalze 24 mit geringem Aufwand ermöglicht wird.

Möglich ist dabei eine Ausbildung der Achsbolzen 61 mit stirnseitigen Kupplungsfortsätzen die einerseits zur Übertragung des Drehmoments und andererseits für eine achsfluchtende Ausrichtung ausgebildet sind.

In den gezeigten Ausführungsbeispielen ist die Fördervorrichtung 4 gegenüber den Tragrahmen 17 um einen Neigungswinkel steigend auf dem Aufnahmetisch 8 abgestützt. Dies stellt allerdings keine Voraussetzung für die Depalletiervorrichtung 1 dar und ist es selbstverständlich auch möglich, die Transportebene 36 in einer horizontalen Ausrichtung d.h. parallel zu der Aufstandsfläche 13 auszurichten.

Für die Stützvorrichtung 47 und dem Erfassungsmittel 52 ist eine Reihe von technischen Möglichkeiten vorstellbar. Eine davon ist beispielsweise die Anwendung einer Druckmessdose. Auch ist ein unter Mediumsdruck stehender Druckspeicher mit einem Druckmesssensor möglich.

Eine weitere Möglichkeit ist die Anwendung eines Piezosensors als Erfassungsmittel 52 der, bspw. über eine vorgespannte Spiraldruckfeder mit der sich ändernden Federkraft beaufschlagt wird und damit die Stützkraft als Lastparameter ermittelt wird.

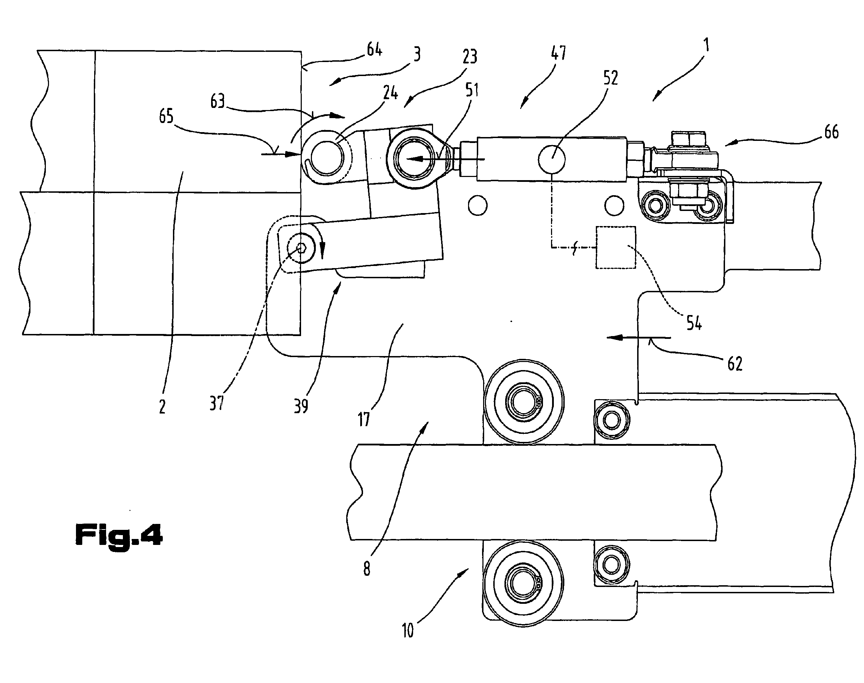

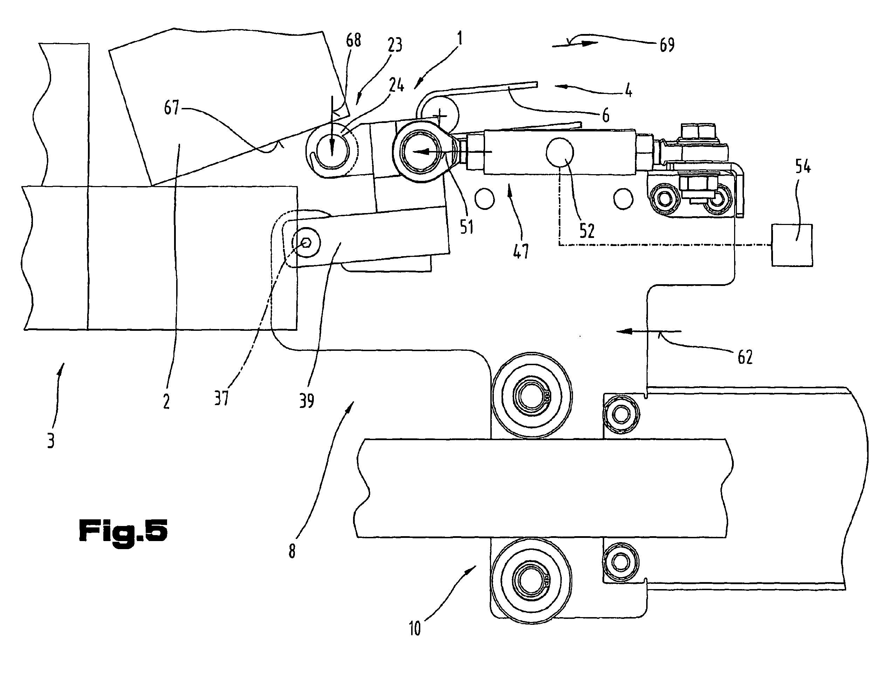

In den Fig. 4 und 5 ist in vereinfachter Darstellung die Aufnahme des Transportguts 2 aus einem Stapel 3 durch die Depalletiervorrichtung 1, insbesondere das Anheben und Unterfahren des Transportgutes 2 bzw. einer Reihe des Transportsguts aus dem Stapel 3, durch die Aufnahmefördervorrichtung 23 gezeigt.

Zur Aufnahme des Transportgutes 2 wird der Aufnahmetisch 8 mittels der nicht weiter dargestellten Vorschubvorrichtung und vorgegebener Vorschubgeschwindigkeit in Richtung des Stapels 2 - gemäß Pfeil 62 - in der Führungsanordnung 10 bewegt. Eine Drehzahl der Förderwalze 24 in einer Drehrichtung - gemäß Pfeil 63, welche beim Andrücken der Förderwalze 24 an Stirnflächen 64 des Transportguts 2 in Folge einer Reibkraft ein Anheben bewirkt, ist den bereits vorhergehend definierten Basiswert ausgelegt. Sobald die Förderwalze 24 an der Stirnfläche 64 zur Anlage gelangt, wird auf diese eine Kraft - gemäß Pfeil 65 - ausgeübt, welche ein Drehmoment auf die Schwenkhebelanordnung 39 bewirkt und eine Schwenkbewegung um die Schwenkachse 37 initiiert.

Diesem Drehmoment setzt die zwischen der Schwenkhebelanordnung 39 und einem Gegenlager 66 am Aufnahmetisch 8 angeordnete Stützvorrichtung 47 die Stützkraft - gemäß Pfeil 51 - entgegen.

Die Vorschubgeschwindigkeit des Aufnahmetisches 8 bewirkt eine Steigerung der Stützkraft - gemäß Pfeil 51, die vom Erfassungsmittel 52 als Lastparameter festgestellt wird und als Regelparameter in die Ansteuerung der nicht weiters dargestellten Antriebsvorrichtung der Förderwalze 24 eingeht.

Mittels einer in der Steuer- und Regeleinrichtung 54 hinterlegter Regelcharakteristik bzw. hinterlegtem Datenmuster wird die Drehzahl der Förderwalze 24 bei ansteigender Stützkraft - gemäß Pfeil 51- erhöht.

Es erfolgt ein Aufkanten des Transports 2 bis eine Höhe zum Unterfahren bei fortschreitender

Vorschubbewegung mit der Förderwalze erreicht wird wie dies nunmehr der Fig. 5 zu entnehmen ist.

Sobald das Transportgut 2 mit einer Unterseite 67 auf der Förderwalze 24 zur Auflage gelangt, bewirkt die Reibkraft der Förderwalze 24 am Transportgut 2 ein Gegendrehmoment an der Hebelanordnung 39 und obwohl eine gewichtsabhängige Auflagerkraft - gemäß Pfeil 68 - auf die Förderwalze 24 einwirkt entsteht durch das Gegenmoment eine momentaner Abfall in der Größenordnung der Stützkraft die üblicher weise durch die geometrischen Verhältnisse der Hebelanordnung 39 eine Druckkraft ist aber auch unter den zuvor beschriebenen Verhältnis der Drehmomente zur Zugkraft wechseln kann.

Entsprechend der vorgegebenen Regelcharakteristik des Lastparameters wird bei Feststellung dieser Stützkraftänderung die Drehzahl der Förderwalze 24 auf eine Umfangsgeschwindigkeit reduziert welche der Transportgeschwindigkeit - gemäß Pfeil 69 - der Fördervorrichtung 4 zum Abtransport des Transportguts 2 auf den Fördermittel 6 entspricht, und eine Basisdrehzahl darstellt.

Weiter ist vorgesehen, dass die Vorschubgeschwindigkeit des Aufnahmetisches 8 in Richtung des Stapels - gemäß Pfeil 62 - annähernd der Fördergeschwindigkeit - gemäß Pfeil 69 - der Fördervorrichtung 4 entspricht. Die Vorschubbewegung in Richtung des Stapels 3 wird beim Aufnehmen des Transportgutes 2 kontinuierlich fortgesetzt bis das Transportgut 2 zur Gänze auf der Förderwalze 24 bzw. in Folge dem Fördermittel 6 der Fördervorrichtung 4 aufgenommen ist.

Zu dem in der Steuer- und Regeleinrichtung 54 hinterlegten Regelcharakteristikas ist festzuhalten, dass entsprechend vom jeweiligen Transportgut abhängig, vorgegebene Lastparameter hinterlegt sein können und damit Depalletiervorgänge an die Eigenschaften wie Gewicht, Empfindlichkeit gegen Beschädigung etc. des Transportguts 2 anpassbar sind und diese Parameter als Steuerungsvorgabe bereits vor Beginn eines Depalletiervorganges, z.B. von in einer Arbeitsplanung festlegbar sind.

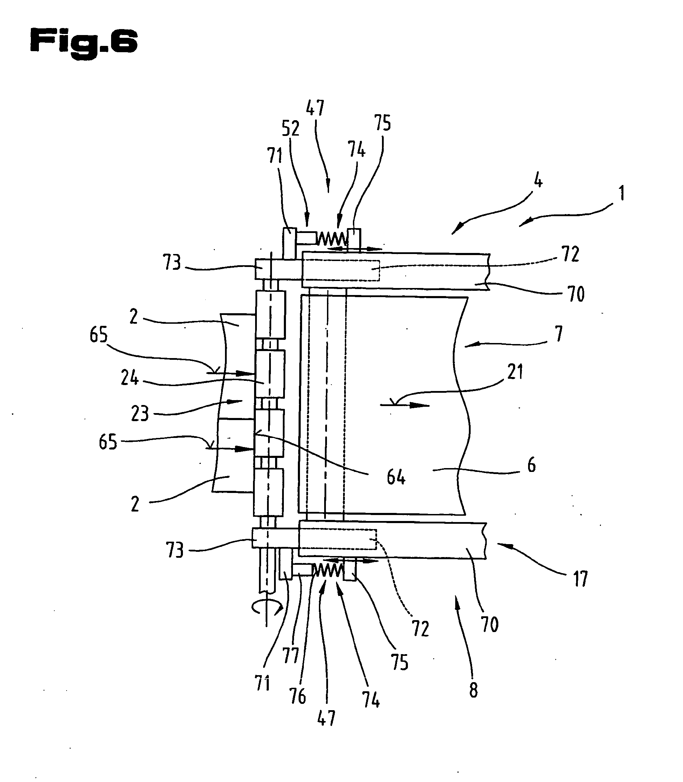

In der Fig. 6 ist eine weitere Ausbildung der Depalletiervorrichtung 1 in vereinfachter Darstellung im Bereich der Aufnahmefördervorrichtung 23 gezeigt.

Rahmenprofile 70 des Aufnahmetisches 8 mit der Fördervorrichtung 4 überragen nach dem gezeigten Ausführungsbeispiel seitlich das Fördermittel 6, z.B. Band 7, der Fördervorrichtung 4. An diesen sind in Endbereichen 71 oder an einander zugewandten Seitenflächen Linearführungen 72 vorgesehen und in diesen linear verstellbare, die Förderwalze 24 drehbar lagernde Führungselemente 73 angeordnet.

Diese Führungselemente 73 sind bspw. entgegen der Wirkung einer Federanordnung 74, sobald vom Transportgut 2 bei Anliegen der Förderwalze 24 an dessen Seitenfläche 64 eine Kraft - gemäß Pfeil 65 - ausgeübt wird, in linearer Richtung in Transportrichtung - gemäß Pfeil 21 - relativ zum Fördermittel 6 der Fördervorrichtung 4 verstellbar.

Entgegen dieser Verstellung wirken zwischen den Führungselementen 73 und den Rahmenprofilen 70 angeordnete, einstellbare, federelastisch ausgebildete und Erfassungsmittel 52 aufweisende Stützvorrichtung 47.

Möglich ist dabei eine Ausbildung der Stützvorrichtung 47 mit einer in ihrer Vorspannung über ein Regelelement 75 verstellbaren Druckfeder 76 die auf ein Schaltmittel 77 als Erfassungsmittel 52 zur Ermittlung der Größenordnung, der den Lastparameter bildenden Stützkraft als Regelsignal für die Drehzahlregelung der Aufnahmefördervorrichtung 23 einwirkt. Das Schaltmittel 77 ist beispielsweise ein Ein- Ausschalter, Näherungssensor etc.

Diese Ausbildung ermöglicht, wie bereits in den vorgehenden Ausführungsbeispielen beschrieben, in Abhängigkeit der über den Lastparameter wie Antriebs- Drehmoment oder Stützkraft ermittelten, auf das Transportgut 2 einwirkenden Reaktionskraft, die Drehzahlregelung in Abhängigkeit einer vorgegebenen, in der Steuer- und Regeleinrichtung 54 bzw. einem Datenspeicher hinterlegter Regelcharakteristik, einer Regeldatei etc., die Förderwalze 24 mit variabler, von zumindest einem physikalischen Parameter des Transportgutes 2 angepasster Drehzahl zu betreiben.

Beispielsweise ist vorgesehen, die Förderwalze 24 mit einer Basisdrehzahl zu betreiben und diese in Abhängigkeit des detektierten Lastparameters gemäß der Regelcharakteristik bedarfsgerecht und dem Transportgut 2 angepasst zu erhöhen und sobald die Stützkraft absinkt wieder auf die Basisdrehzahl zu reduzieren. Dieser Schaltvorgang wird erreicht, sobald das

Transportgut 2 nach dem Anheben von der Förderwalze 24 unterfahren, bzw. auf dieser zur Auflage gelangt.

Bevorzugt ist, dass bei der Basisdrehzahl, die Umfangsgeschwindigkeit der Förderwalze 24 gleichgesetzt ist mit der Transportgeschwindigkeit des Fördermittels 6 der Fördervorrichtung 4.

Diese Maßnahmen für den Betrieb der Depalletiervorrichtung 1 betreffen sowohl die Ausbildungen nach den zuvor beschriebenen Fig. 1 bis 5 wie auch die in der Fig. 6 beschriebene weitere Ausbildung der Depalletiervorrichtung 1.

Eine weitere Möglichkeit zur Drehzahlregelung des Antriebsmotors der Aufnahmefördervorrichtung 23 bietet die Ermittlung des Antriebs- Drehmomentes des Antriebsmotors 27 als Lastparameters über eine Messeinrichtung 80, z.B. Messung der Energieaufnahme. Im Falle eines Elektromotors z.B. über die Stromaufnahme oder an einem Hydromotor über eine Druckmessung des Druckmediums.

Sobald die Förderwalze 24 am Transportgut 2 anliegt tritt eine Steigerung des Lastparameters ein und erfolgt entsprechend in der Steuer- und Regeleinrichtung 54 hinterlegter Regelcharakteristik oder Regeldatei eine Erhöhung der Drehzahl bis ein Abfall des Lastparameters detektiert wird und damit eine Rückregelung der Drehzahl auf den Basiswert erfolgt.

Die Ausführungsbeispiele zeigen mögliche Ausführungsvarianten der Depalletiervorrichtung, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

Der Ordnung halber sei abschließend darauf hingewiesen, dass zum besseren Verständnis des Aufbaus der Depalletiervorrichtung diese bzw. deren Bestandteile teilweise unmaßstäblich und/oder vergrößert und/oder verkleinert dargestellt wurden.

### Bezugszeichenaufstellung

- 1: Depalletiervorrichtung
- 2: Transportgut
- 3: Stapel
- 4: Fordervorrichtung
- 5: Antriebsmotor

- 6: Fördermittel
- 7: Band
- 8: Aufnahmetisch
- 9: Vorschubantrieb
- 10: Führungsanordnung

- 11: Tragarm
- 12: Hubvorrichtung
- 13: Aufstandsfläche
- 14: Doppelpfeil
- 15: Zugmitteltrieb

- 16: Kettentrieb
- 17: Tragrahmen
- 18: Mitnehmer
- 19: Zugmittel
- 20: Endbereich

- 21: Pfeil
- 22: Transportbreite
- 23: Aufnahmefördervorrichtung
- 24: Förderwalze
- 25: Durchmesser

- 26: Antriebsvorrichtung
- 27: Antriebsmotor
- 28: Winkelgetriebe
- 29: Gelenkwelle
- 30: Seitenprofil

- 31: Seitenprofil
- 32: Tragfortsatz
- 33: Schwenklager
- 34: Schwenklageranordnung
- 35: Oberfläche

- 36: Transportebene
- 37: Schwenkachse
- 38: Drehlager
- 39: Schwenkhebelanordnung
- 40: Tragbügel
- 41: Drehachse
- 44: Pfeil

- 46: Pfeil
- 47: Stützvorrichtung
- 48: Ablenkmittel
- 49: Anlenkmittel
- 50: Ankerprofil

- 51: Pfeil
- 52: Erfassungsmittel
- 53: Kommunikationsverbindung
- 54: Steuer- u. Regeleinrichtung
- 55: Zentralsteuereinrichtung

- 56: Leitung
- 57: Querstrebe
- 58: Höhe
- 59: Stützlager
- 60: Walzenabschnitt

- 61: Achsbolzen
- 62: Pfeil
- 63: Pfeil
- 64: Stirnfläche
- 65: Pfeil

- 66: Gegenlager
- 67: Unterseite
- 68: Pfeil
- 69: Pfeil
- 70: Rahmenprofil

- 71: Endbereich
- 72: Linearführung
- 73: Führungselement
- 74: Federanordnung
- 75: Regelelement

- 76: Druckfeder
- 77: Schaltmittel
- 80: Messeinrichtung

## Patentansprüche

1. Depalletiervorrichtung (1) für ein in einem Stapel (3) bereitgestelltes Transportgut (2) mit einer linear in einer Führungsanordnung (10) mit einem Vorschubantrieb (9) verstellbaren Aufnahmetisch (8) mit einer auf diesem angeordneten mit einem Antriebsmotor (5) antriebsverbundenen Fördervorrichtung (4) und mit einer in zumindest einem Endbereich der Fördervorrichtung (4) angeordneten Aufnahmefördervorrichtung (23), die mit einem vom Antrieb der Fördervorrichtung (4) unabhängigen Antriebsmotor (27) antriebsverbunden ist, **dadurch gekennzeichnet, dass** die Aufnahmefördervorrichtung (23) an einem Tragerahmen (17) des verstellbaren Aufnahmetisches (8) entgegen der Wirkung von zumindest einer Stützvorrichtung (47) verstellbar gelagert ist und die Stützvorrichtung (47) ein Erfassungsmittel (52) zur
Detektierung eines, die Aufnahmefördervorrichtung (23) bei Kontakt mit dem zu depalletierenden Transportgut (2), beaufschlagenden Lastparameters aufweist.

2. Depalletiervorrichtung (1) nach Anspruch 1, **dadurch gekennzeichnet, dass** die Aufnahmefördervorrichtung (23) drehbar in einer Schwenkhebelanordnung (39) gelagert ist die in Schwenklagern (34) an dem Tragrahmen (17) des Aufnahmetisches (8) um eine zu der Transportrichtung senkrecht und einer Transportebene (36) der Fördervorrichtung (4) parallel verlaufenden Schwenkachse (37) schwenkbar gelagert ist und die Schwenkhebelanordnung (39) über die mit dem Erfassungsmittel (52) versehene Stützvorrichtung (47) gegenüber dem Tragrahmen (17) abgestützt ist.

3. Depalletiervorrichtung (1) nach Anspruch 1, **dadurch gekennzeichnet, dass** die Aufnahmefördervorrichtung (23) in Linearführungen (72) des Tragrahmen (17) entgegen der Wirkung der mit dem Erfassungsmittel (52) versehenen Stützvorrichtung (47) in Transportrichtung verstellbar gelagert ist.

4. Depalletiervorrichtung (1) nach Anspruch 1, **dadurch gekennzeichnet, dass** die Stützvorrichtung (47) über ein Anlenkmittel (48) an der Schwenkhebelanordnung (39) und mit einem weiteren Anlenkmittel (49) bevorzugt am Tragrahmen (17) des Aufnahmetisches (8) befestigt ist.

5. Depalletiervorrichtung (1) nach Anspruch 4, **dadurch gekennzeichnet, dass** die Anlenkmittel (48, 49) eine verspannungsfreie Gelenkverbindung ausbilden.

6. Depalletiervorrichtung (1) nach Anspruch 1, **dadurch gekennzeichnet, dass** der Antriebsmotor (27) der Aufnahmefördervorrichtung (23) am Tragrahmen (17) des Aufnahmetisches (8) angeordnet ist.

7. Depalletiervorrichtung (1) nach Anspruch 1, **dadurch gekennzeichnet, dass** die Antriebsverbindung zwischen dem Antriebsmotor (27) und dem Aufnahmefördervorrichtung (23) durch eine, in Verstellrichtung der Aufnahmefördervorrichtung (23) kraftfreie Drehmoment-Übertragungsvorrichtung, z.B. eine Gelenkwelle (29), gebildet ist.

8. Depalletiervorrichtung (1) nach Anspruch 1, **dadurch gekennzeichnet, dass** der Antriebsmotor (27) durch einen von einem Regler einer Steuer- und Regeleinrichtung (54) beaufschlagten drehzahlregelbaren elektro- oder hydro- Servomotor gebildet ist.

9. Depalletiervorrichtung (1) nach Anspruch 1, **dadurch gekennzeichnet, dass** das Erfassungsmittel (52) der Stützvorrichtung (47) z.B. durch einen Kraftmesssensor, Ein- Ausschalter, Näherungssensor etc. gebildet ist.

10. Depalletiervorrichtung (1) nach Anspruch 1, **dadurch gekennzeichnet, dass** das Erfassungsmittel (52) durch ein Piezoelement gebildet ist.

11. Depalletiervorrichtung (1) nach Anspruch 1, **dadurch gekennzeichnet, dass** die Stützvorrichtung (47) durch ein mit einem Druckmedium beaufschlagbares Druckspeicherelement gebildet ist.

12. Depalletiervorrichtung (1) nach Anspruch 11, **dadurch gekennzeichnet, dass** das Erfassungsmittel (52) durch einen am Druckspeicherelement vorgesehenen Druckmesssensor gebildet ist.

13. Depalletiervorrichtung (1) nach Anspruch 1, **dadurch gekennzeichnet, dass** das Erfassungsmittel (52) durch eine, ein Antriebs- Drehmoment des Antriebsmotors (27) als Lastparameter ermittelnde Messeinrichtung gebildet ist.

14. Depalletiervorrichtung (1) nach einem der vorhergehenden Ansprüche, **dadurch gekennzeichnet, dass** das Erfassungsmittel (52) mit der Steuer- und Regeleinrichtung und mit einer Zentralsteuereinrichtung (55) kommunikationsverbundenen ist.

15. Depalletiervorrichtung (1) nach einem der vorhergehenden Ansprüche, **dadurch gekennzeichnet, dass** die Stützvorrichtung (47) elastisch abgestützt ausgebildet ist.

16. Depalletiervorrichtung (1) nach einem der vorhergehenden Ansprüche, **dadurch gekennzeichnet, dass** die Stützvorrichtung (47) ein Regelelement (75) zur wahlweisen Veränderung der, der Relativverstellung der Aufnahmefördervorrichtung (23) entgegen wirkenden Stützkraft aufweist.

17. Depalletiervorrichtung (1) nach Anspruch 16, **dadurch gekennzeichnet, dass** das Regelelement (75) durch ein eine Federvorspannung einer Federanordnung (74), und damit eine Spannkraft der Stützvorrichtung (47) regelbares, und etwa in einer Wirklinie der Stützkraft wirkendes Stellmittel gebildet ist. 6

18. Depalletiervorrichtung (1) nach Anspruch 16, **dadurch gekennzeichnet, dass** das Regelelement (75) durch einen Druckregler für ein Druckmedium gebildet ist.

19. Depalletiervorrichtung (1) nach einem der vorhergehenden Ansprüche, **dadurch gekennzeichnet, dass** die Aufnahmefördervorrichtung (23) durch eine, über zumindest eine Transportbreite (22) der Fördervorrichtung (4) erstreckende Förderwalze (24), bevorzugt mit durchgehender Achse gebildet ist.

20. Depalletiervorrichtung (1) nach Anspruch 19, **dadurch gekennzeichnet, dass** die Förderwalze (24) aus mehreren voneinander über drehmomentübertragende Achsbolzen (61) in einem geringen Abstand distanzierten Walzenabschnitte (60) gebildet ist.

21. Depalletiervorrichtung (1) nach einem der Ansprüche 19 oder 20, **dadurch gekennzeichnet, dass** in dem Abstand zwischen den Tragbügeln (40) bevorzugt Stützlager (59) für die Förderwalze (24) an der Schwenkhebelanordnung (39) vorgesehen sind.

22. Depalletiervorrichtung (1) nach Anspruch 20, **dadurch gekennzeichnet, dass** die Stützlager (59) für die Achsbolzen (61) zwischen den Walzenabschnitten (60) als untergreifende Schalenlager ausgebildet sind.

23. Depalletiervorrichtung (1) nach einem der vorhergehenden Ansprüche, **dadurch gekennzeichnet, dass** die Aufnahmefördervorrichtung (23), insbesondere die Förderwalze (24) in Drehlager (38) der Schwenkhebelanordnung (39) drehbar gelagert ist.

24. Depalletiervorrichtung (1) nach einem der vorhergehenden Ansprüche, **dadurch gekennzeichnet, dass** die Schwenkhebelanordnung (39) mit der drehbar gelagerten Förderwalze (24), durch seitlich am Tragrahmen (17) gelagerte, den Tragrahmen (17) überragende Tragbügel (40) gebildet ist und ein Abstand zwischen den Tragbügeln (40) größer ist als die Transportbreite (22) der Fördervorrichtung (4).

25. Depalletiervorrichtung (1) nach einem der vorhergehenden Ansprüche, **dadurch gekennzeichnet, dass** jeder Tragbügel (40) der Schwenkhebelanordnung (39) über die, mit Erfassungsmitteln (52) versehenen Stützvorrichtung (47) gegenüber dem Tragrahmen (17) der Fördervorrichtung (4) abgestützt ist, wobei eine Wirklinie der Stützkraft etwa parallel zur Transportebene (36) und innerhalb eines Normalabstandes (43) zwischen der Transportebene (36) und der Schwenkachse (37) verläuft.

26. Depalletiervorrichtung (1) nach den Ansprüchen 3 und 19, **dadurch gekennzeichnet, dass** die Förderwalze (24) drehbar in Führungselemente (73) gelagert ist, die in den Linearführungen (72) von Rahmenprofilen (70) verstellbar gelagert und gegenüber diesem, über zumindest eine, mit dem Erfassungsmittel (52) versehene, vorspannbare federelastische Stützvorrichtung (47) abgestützt ist.

27. Verfahren zum Betrieb einer Depalletiervorrichtung (1) nach einem der Ansprüche 1 bis 26, **dadurch gekennzeichnet, dass** in Abhängigkeit von dem Erfassungsmittel (52) der Stützvorrichtung (47) detektierten, auf die Aufuahmefördervorrichtung (23) bzw. die Förderwalze (24) bei Kontakt mit dem zu depallettierenden Transportgut (2) einwirkenden Lastparameter in der Steuer- und Regeleinrichtung (54) ein Regelsignal zur Drehzahlregelung des Antriebsmotors (27) der Förderwalze (24) generiert wird.

28. Verfahren nach Anspruch 27, **dadurch gekennzeichnet, dass** bei Detektierung eines Lastanstieges von einem vorgegebenen Lastparameter die Drehzahl ausgehend von einer Basisdrehzahl entsprechend einer vorgegebenen Regelcharakteristik erhöht wird und bei Detektierung eines Lastabfalls auf die Basisdrehzahl rückgeregelt wird.

29. Verfahren nach Anspruch 27, **dadurch gekennzeichnet, dass** entsprechen dem Regelsignal nach einer in einer Datei der Steuer- und Regeleinrichtung (54) hinterlegten Regelcharakteristik oder Datensatz für die Stützkraft als Lastparameter die Drehzahl des Antriebsmotors (27) der Aufnahmefördervorrichtung (23) ausgehend von einer Basisdrehzahl bei einem Anstieg der Stützkraft erhöht wird.

30. Verfahren nach Anspruch 27, **dadurch gekennzeichnet, dass** entsprechen dem Regelsignal nach einer in einer Datei der Steuer- und Regeleinrichtung (54) hinterlegten Regelcharakteristik oder Datensatz für das Antriebs- Drehmoment als Lastparameter die Drehzahl des Antriebsmotors (27) der Aufnahmefördervorrichtung (23) ausgehend von einer Basisdrehzahl bei einem Anstieg des Antriebs- Drehmomentes erhöht wird.

31. Verfahren nach Anspruch 27, **dadurch gekennzeichnet, dass** eine Umfangsgeschwindigkeit der Aufnahmefördervorrichtung (23) bei Basisdrehzahl etwa gleich ist einer nahezu gleich bleibenden Fördergeschwindigkeit der Fördervorrichtung (4).

32. Verfahren nach Anspruch 27 oder 28, **dadurch gekennzeichnet, dass** die Regelcharakteristik für die Erhöhung der Drehzahl der Förderwalze (24) der Aufnahmefördervorrichtung (23) in Abhängigkeit von zumindest einem physikalischem Parameter, z.B. Gewicht des Transportguts (2), variierbar ist.

## Claims

1. Depalletising device (1) for a transported product (2) disposed in a stack (3) comprising a mounting table (8) which is linearly displaceable in a guiding arrangement (10) by means of a feed drive (9), with a conveying device (4) disposed on the latter and drive-connected to a drive motor (5) and with a mounting conveying device (23) disposed in at least one end region of the conveying device (4) which is drive-connected to a drive motor (27) that is independent of the drive of the conveying device (4), **characterised in that** the mounting conveying device (23) is mounted on a support frame (17) of the displaceable mounting table (8) so that it can be displaced against the action of at least one support device (47), and the support device (47) has a detecting means (52) for detecting a load parameter to which the mounting conveying device (23) is subjected on contact with the transported product (2) to be depalletised.

2. Depalletising device (1) as claimed in claim 1, **characterised in that** the mounting conveying device (23) is mounted so as to be rotatable in a pivot lever arrangement (39) which is mounted so as to be pivotable in pivot bearings (34) on the support frame (17) of the mounting table (8) about a pivot axis (37) running perpendicular to the transport direction and parallel with a transport plane (36) of the conveying device (4), and the pivot lever arrangement (39) is supported relative to the support frame (17) by means of the support device (47) provided with the detecting means (52).

3. Depalletising device (1) as claimed in claim 1, **characterised in that** the mounting conveyor device (23) is mounted in linear guides (72) of the support frame (17) so as to be displaceable in the transport direction against the action of the support device (47) provided with the detecting means (52).

4. Depalletising device (1) as claimed in claim 1, **characterised in that** the support device (47) is secured to the pivot lever arrangement (39) by means of an articulation means (48) and preferably to the support frame (17) of the mounting table (8) by means of an additional articulation means (49).

5. Depalletising device (1) as claimed in claim 4, **characterised in that** the articulation means (48, 49) form a tension-free joint connection.

6. Depalletising device (1) as claimed in claim 1, **characterised in that** the drive motor (27) of the mounting conveying device (23) is disposed on the support frame (17) of the mounting table (8).

7. Depalletising device (1) as claimed in claim 1, **characterised in that** the drive connection between the drive motor (27) and the mounting conveying device (23) is formed by a torque transmission device that is force-free in the direction of displacement of the mounting conveying device (23), e.g. a Cardan shaft (29).

8. Depalletising device (1) as claimed in claim 1, **characterised in that** the drive motor (27) is provided in the form of a speed-controlled electric or hydraulic servomotor operated by a controller of a control and regulating device (54).

9. Depalletising device (1) as claimed in claim 1, **characterised in that** the detecting means (52) of the support device (47) is provided in the form of a force measuring sensor, on-off switch, proximity sensor, etc., for example

10. Depalletising device (1) as claimed in claim 1, **characterised in that** the detecting means (52) is provided in the form of a piezo element.

11. Depalletising device (1) as claimed in claim 1, **characterised in that** the support device (47) is provided in the form of a pressure storage element that can be charged by a pressurising medium.

12. Depalletising device (1) according to claim 11, **characterised in that** the detecting means (52) is provided in the form of a pressure measuring sensor provided on the pressure storage element.

13. Depalletising device (1) as claimed in claim 1, **characterised in that** the detecting means (52) is provided in the form of a measuring device determining a driving torque of the drive motor (27) as a load parameter.

14. Depalletising device (1) as claimed in one of the preceding claims, **characterised in that** the detecting means (52) is connected so as to communicate with the control and regulating device and with a central control device (55).

15. Depalletising device (1) as claimed in one of the preceding claims, **characterised in that** the support device (47) is designed to be elastically supported.

16. Depalletising device (1) as claimed in one of the preceding claims, **characterised in that** the support device (47) comprises a control element (75) for optionally adjusting the support force acting against the relative adjustment of the mounting conveying device (23).

17. Depalletising device (1) as claimed in claim 6, **characterised in that** the control element (75) is provided in the form of an adjusting means controlled by the spring tensioning of a spring arrangement (74) and hence a tensioning force of the support device (47) acting in a line of action of the support force.

18. Depalletising device (1) as claimed in claim 6, **characterised in that** the control element (75) is provided in the form of a pressure regulator for a pressurising medium.

19. Depalletising device (1) as claimed in one of the preceding claims, **characterised in that** the mounting conveying device (23) is provided in the form of a conveying roller (24) extending across at least one transport width (22) of the conveying device (4), and preferably has a continuous axis.

20. Depalletising device (1) as claimed in claim 19, **characterised in that** the conveying roller (24) is formed by several roller sections (60) spaced a small distance apart from one another by torque-transmitting axial bolts (61).

21. Depalletising device (1) as claimed in one of claims 19 or 20, **characterised in that** in the space between the supports brackets (40) preferably support bearings (59) are provided for the conveying roller (24) on the pivot lever arrangement (39).

22. Depalletising device (1) as claimed in claim 20, **characterised in that** the support bearings (59) for the axial bolts (61) are disposed between the roller sections (60) in the form of undergripping shell bearings.

23. Depalletising device (1) as claimed in one of the preceding claims, **characterised in that** the mounting conveying device (23), in particular the conveying roller (24), is mounted so as to be rotatable in rotary bearings (38) of the pivot lever arrangement (39).

24. Depalletising device (1) as claimed in one of the preceding claims, **characterised in that** the pivot lever arrangement (39) with the rotatably mounted conveying roller (24) is formed by support brackets (40) mounted laterally on the support frame (17) and projecting over the support frame (17), and a distance between the support brackets (40) is greater than the transport width (22) of the conveying device (4).

25. Depalletising device (1) as claimed in one of the preceding claims, **characterised in that** each support bracket (40) of the pivot lever arrangement (39) is supported by the support device (47) provided with detecting means (52) relative to the support frame (17) of the conveying device (4), and a line of action of the support force runs approximately parallel with the transport plane (36) and within a normal distance (43) between the transport plane (36) and pivot axis (37).

26. Depalletising device (1) as claimed in claims 3 and 19, **characterised in that** conveying roller (24) is mounted so as to be rotatable in guiding elements (73) which are mounted so as to be displaceable in the linear guides (72) of frame profiles (70) and are supported relative to the latter by means of at least one tensionable, spring-elastic support device (47) provided with the detecting means (52).

27. Method of operating a depalletising device (1) as claimed in one of claims 1 to 26, **characterised in that** a control signal for controlling the speed of the drive motor (27) of the conveying roller (24) is generated as a function of a load parameter in the control and regulating device (54) which is detected by the detecting means (52) of the support device (47) and acts on the mounting conveying device (23) or the conveying roller (24) upon contact with the transported product (2) to be depalletised.

28. Method as claimed in claim 27, **characterised in that** when an increase in load of a predetermined load parameter is detected, the speed is increased on the basis of a base speed according to a predetermined control characteristic and is set back to the base speed when a drop in load is detected.

29. Method as claimed in claim 27, **characterised in that** depending on the control signal in accordance with a control characteristic or data set stored in a file of the control and regulating device (54) for the support force serving as a load parameter, the speed of the drive motor (27) of the mounting conveying device (23) is increased on the basis of a base speed in the event of an increase in the support force.

30. Method as claimed in claim 27, **characterised in that** depending on the control signal in accordance with a control characteristic or data set stored in a file of the control and regulating device (54) for the driving torque serving as a load parameter, the speed of the drive motor (27) of the mounting conveying device (23) is increased on the basis of a base speed in the event of an increase in the driving torque.

31. Method as claimed in claim 27, **characterised in that** the circumferential speed of the mounting conveying device (23) at base speed is almost the same as a virtually uniform conveying speed of the conveying device (4).

32. Method as claimed in claim 27 or 28, **characterised in that** the control characteristic for increasing the speed of the conveying roller (24) of the mounting conveying device (23) can be varied as a function of at least one physical parameter, e.g. weight of the transported product (2).

## Revendications

1. Dispositif de dépallétisation (1) pour une marchandise de transport (2) mise à disposition en une pile (3), avec une table de réception (8) ajustable linéairement dans un agencement de guidage (10) avec une commande de poussée (9), avec un dispositif de convoyage (4) disposé sur celle-ci et dont l'entraînement est relié à un moteur d'entraînement (5) et avec un dispositif de convoyage de réception (23) disposé dans au moins une zone d'extrémité du dispositif de convoyage (4), dont l'entraînement est relié à un moteur d'entraînement (27) indépendant de l'entraînement du dispositif de convoyage (4), **caractérisé en ce que** le dispositif de convoyage de réception (23) est logé d'une manière ajustable à un châssis de support (17) de la table de réception ajustable (8) contre l'effet d'au moins un dispositif de support (47), et que le dispositif de support (47) présente un moyen de détection (52) pour la détection d'un paramètre de charge sollicitant le dispositif de convoyage de réception (23) lors du contact avec la marchandise de transport à dépallétiser (2).

2. Dispositif de dépallétisation (1) selon la revendication 1, **caractérisé en ce que** le dispositif de convoyage de réception (23) est logé d'une manière tournante dans un agencement de levier pivotant (39) qui est logé d'une manière pivotante dans des paliers de pivotement (34) au châssis de support (17) de la table de réception (8) autour d'un axe de pivotement (37) s'étendant perpendiculairement à la direction de transport et parallèlement à un plan de transport (36) du dispositif de convoyage (4), et l'agencement de levier pivotant (39) s'appuie par le dispositif de support (47) pourvu du moyen de détection (52) par rapport au châssis de support (17).

3. Dispositif de dépallétisation (1) selon la revendication 1, **caractérisé en ce que** le dispositif de convoyage de réception (23) est logé d'une manière ajustable dans des guidages linéaires (72) du châssis de support (17) contre l'effet du dispositif de support (47) pourvu du moyen de détection (52) dans la direction de transport.

4. Dispositif de dépallétisation (1) selon la revendication 1, **caractérisé en ce que** le dispositif de support (47) est fixé par un moyen d'articulation (48) à l'agencement de levier de pivotement (39) et par un autre moyen d'articulation (49) de préférence au châssis de support (17) de la table de réception (8).

5. Dispositif de dépallétisation (1) selon la revendication 4, **caractérisé en ce que** les moyens d'articulation (48, 49) constituent une liaison d'articulation exempte de tensions.

6. Dispositif de dépallétisation (1) selon la revendication 1, **caractérisé en ce que** le moteur d'entraînement (27) du dispositif de convoyage de réception (23) est disposé au châssis de support (17) de la table de réception (8).

7. Dispositif de dépallétisation (1) selon la revendication 1, **caractérisé en ce que** la liaison d'entraînement entre le moteur d'entraînement (27) et le dispositif de convoyage de réception (23) est formée par un dispositif de transmission de couple de rotation exempt de force dans la direction de déplacement du dispositif de convoyage de réception (23), par exemple par un arbre d'articulation (29).

8. Dispositif de dépallétisation (1) selon la revendication 1, **caractérisé en ce que** le moteur d'entraînement (27) est formé par un servo-moteur électrique ou hydraulique, à vitesse de rotation réglable, chargé par un régulateur de l'installation de commande et de régulation (54).

9. Dispositif de dépallétisation (1) selon la revendication 1, **caractérisé en ce que** le moyen de détection (52) du dispositif de support (47) est formé par exemple par un capteur de mesure de force, un commutateur de mise en/hors service, un capteur d'approche etc.

10. Dispositif de dépallétisation (1) selon la revendication 1, **caractérisé en ce que** le moyen de détection (52) est formé par un élément piézoélectrique.

11. Dispositif de dépallétisation (1) selon la revendication 1, **caractérisé en ce que** le dispositif de support (47) est formé par un élément de stockage de pression apte à être chargé par un milieu sous pression.

12. Dispositif de dépallétisation (1) selon la revendication 11, **caractérisé en ce que** le moyen de détection (52) est formé par un capteur de mesure de pression prévu à l'élément de stockage de pression.

13. Dispositif de dépallétisation (1) selon la revendication 1, **caractérisé en ce que** le moyen de détection (52) est formé par une installation de mesure déterminant le couple d'entraînement de rotation du moteur d'entraînement (27) en tant que paramètre de charge.

14. Dispositif de dépallétisation (1) selon l'une des revendications précédentes, **caractérisé en ce que** le moyen de détection (52) est relié en communication avec l'installation de commande et de régulation et avec une installation de commande centrale (55).

15. Dispositif de dépallétisation (1) selon l'une des revendications précédentes, **caractérisé en ce que** le dispositif de support (47) est supporté d'une manière élastique.

16. Dispositif de dépallétisation (1) selon l'une des revendications précédentes, **caractérisé en ce que** le dispositif de support (47) présente un élément de régulation (75) pour la modification sélective de la force de support agissant contre l'ajustement relatif du dispositif de convoyage de réception (23).

17. Dispositif de dépallétisation (1) selon la revendication 6, **caractérisé en ce que** l'élément de régulation (75) est formé par un moyen de positionnement apte à régler une précontrainte d'un agencement de ressort (74) et donc une force de serrage du dispositif de support (47), et agissant approximativement dans une ligne d'action de la force de support.

18. Dispositif de dépallétisation (1) selon la revendication 16, **caractérisé en ce que** l'élément de régulation (75) est formé par un régulateur de pression d'un milieu sous pression.

19. Dispositif de dépallétisation (1) selon l'une des revendications précédentes, **caractérisé en ce que** le dispositif de convoyage de réception (23) est formé par un rouleau de convoyage (24) s'étendant sur au moins une largeur de transport (22) du dispositif de convoyage (4), de préférence avec un axe traversant.

20. Dispositif de dépallétisation (1) selon la revendication 19, **caractérisé en ce que** le rouleau de support (24) est formé par plusieurs sections de rouleau (60) espacés les uns des autres par des boulons d'axe (61) transférant le couple de rotation, à un faible écart.

21. Dispositif de dépallétisation (1) selon l'une des revendications 19 ou 20, **caractérisé en ce que** sont prévus dans l'écart entre les étriers de support (40) de préférence des paliers de support (59) pour le rouleau de convoyage (24) à l'agencement de levier de pivotement (39).

22. Dispositif de dépallétisation (1) selon la revendication 20, **caractérisé en ce que** les paliers de support (59) pour les boulons d'axe (61) sont réalisés entre les sections de rouleau (60) comme paliers à coquilles passant en dessous.

23. Dispositif de dépallétisation (1) selon l'une des revendications précédentes, **caractérisé en ce que** le dispositif de convoyage de réception (23), en particulier le rouleau de convoyage (24) est logé d'une manière tournante dans des paliers de rotation (38) de l'agencement de levier de pivotement (39).

24. Dispositif de dépallétisation (1) selon l'une des revendications précédentes, **caractérisé en ce que** l'agencement de levier de pivotement (39) avec le rouleau de transport (24) logé d'une manière tournante est formé par des étriers de support (40) logés latéralement au châssis de support (17), faisant saillie sur le châssis de support (17), et un écart entre les étriers de support (40) est plus grand que la largeur de transport (22) du dispositif de convoyage (4).

25. Dispositif de dépallétisation (1) selon l'une des revendications précédentes, **caractérisé en ce que** chaque étrier de support (40) de l'agencement de levier de pivotement (39) s'appuie par le dispositif d'appui (47) muni de moyens de détection (52) par rapport au châssis de support (17) du dispositif de convoyage (4), où une ligne d'action de la force de support s'étend à peu près parallèlement au plan de transport (36) et à l'intérieur d'un écart normal (43) entre le plan de transport (36) et l'axe de pivotement (37).

26. Dispositif de dépallétisation (1) selon les revendications 3 et 19, **caractérisé en ce que** le rouleau de transport (24) est logé d'une manière tournante dans des éléments de guidage (73) qui sont logés d'une manière déplaçable dans des guidages linéaires (72) de profilés de châssis (70) et s'appuie par rapport à celui-ci, par au moins un dispositif de support (47) ayant une élasticité de ressort, pouvant être précontraint, pourvu du moyen de détection (52).

27. Procédé de fonctionnement d'un disposition de dépallétisation (1) selon l'une des revendications 1 à 26, **caractérisé en ce qu'**en fonction du paramètre de charge détecté par le moyen de détection (52) du dispositif de support (47), agissant sur le dispositif de convoyage de réception (23) respectivement le rouleau de convoyage (24) lors d'un contact avec la marchandise de transport (2) à dépallétiser, il est produit dans l'installation de commande et de régulation (54) un signal de régulation pour la régulation de la vitesse de rotation du moteur d'entraînement (27) du rouleau de transport (24).

28. Procédé selon la revendication 27, **caractérisé en ce que** lors de la détection d'une augmentation de la charge depuis un paramètre de charge prédéfini, la vitesse de rotation, en partant d'une vitesse de rotation de base, est augmentée conformément à une caractéristique de régulation prédéfinie et, lors de la détection d'une diminution de la charge, est ramenée à la vitesse de rotation de base.

29. Procédé selon la revendication 27, **caractérisé en ce que** conformément au signal de régulation, selon une caractéristique de régulation stockée dans un fichier de l'installation de commande et de régulation (54) ou jeu de données pour la force de support comme paramètre de charge, la vitesse de rotation du moteur d'entraînement (27) du dispositif de convoyage de réception (23) est augmentée en partant d'une vitesse de rotation de base lors d'une augmentation de la force de support.

30. Procédé selon la revendication 27, **caractérisé en ce que** conformément au signal de régulation selon une caractéristique de régulation stockée dans un fichier de l'installation de commande et de régulation (54) ou le jeu de données pour le couple de rotation d'entraînement comme paramètre de charge, la vitesse de rotation du moteur d'entraînement (27) du dispositif de convoyage de réception (23) est augmentée en partant d'une vitesse de rotation de base lors d'une augmentation du couple de rotation d'entraînement.

31. Procédé selon la revendication 27, **caractérisé en ce qu'**une vitesse périphérique du dispositif de convoyage de réception (23) à la vitesse de rotation de base est approximativement identique à une vitesse de convoyage qui reste sensiblement constante du dispositif de convoyage (4).

32. Procédé selon la revendication 27 ou 28, **caractérisé en ce que** la caractéristique de régulation pour l'augmentation de la vitesse de rotation du rouleau de convoyage (24) du dispositif de convoyage de réception (23) peut être variée en fonction d'au moins un paramètre physique, par exemple le poids de la marchandise à transporter (2).
